(19) **Europäisches Patentamt / European Patent Office / Office européen des brevets**

(11) **EP 2 801 971 A1**

(12) **EUROPEAN PATENT APPLICATION**

(43) Date of publication:
**12.11.2014 Bulletin 2014/46**

(51) Int Cl.:
*G09G 5/14* *(2006.01)*   *G09G 5/395* *(2006.01)*
*G06T 15/40* *(2011.01)*

(21) Application number: **13167271.9**

(22) Date of filing: **10.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rightware Oy**
**02200 Espoo (FI)**

(72) Inventors:
- **Volotinen, Tuomas**
  **02200 Espoo (FI)**
- **Vlasov, Alexey**
  **02200 Espoo (FI)**

(74) Representative: **Seppo Laine Oy**
**Itämerenkatu 3 B**
**00180 Helsinki (FI)**

(54) **A method of and system for rendering an image**

(57)    This invention relates generally to a method of and system for rendering images. In particular, to a method of rendering an image containing a plurality of opaque and at least partially transparent layers listed in a layer tree. The plurality of layers of a layer tree of an image are separated into a first list of opaque layers and a second list of at least partially transparent layers. Each layer is assigned an index number and the lists are sorted with reference to the assigned index numbers. It is determined whether or not each layer requires rendering and a mask is applied to each layer or certain layers to be rendered if they are overlapped by at least one opaque layer. Layers to be rendered are rendered in order based on their position in their respective sorted list.

FIG 5a

FIG 5b

**Description**

FIELD OF THE INVENTION

This invention relates generally to a method of and system for rendering images. In particular, this invention relates to a method of rendering an image containing a plurality of opaque and at least partially transparent layers.

BACKGROUND TO THE INVENTION

Generally, in graphical applications, the Graphics Processing Unit (GPU) is typically the slowest part of a processing pipeline, i.e. the bottleneck. In interactive graphical applications, for example, content displayed on a display screen has to be continously updated. In a case where an image changes, e.g., a menu window is closed, the entire image of the menu window needs to be rendered completely on each frame. However, this known method of rendering the entire content, even if parts of the content are not being updated, results in non-optimal rendering performance. The method further results in an increase in power consumption, especially for real-time applications. Another known method for rendering includes the use of a painter's algorithm where a layer tree is rendered from top to bottom, but again this method is relatively inefficient.

Therefore, it is an object of the present invention to provide an alternative method of rendering an image and a system therefor, in part to address at least some of the abovementioned problem(s).

SUMMARY OF THE INVENTION

According to a first aspect of the invention, there is provided a method of rendering an image containing a plurality of opaque and at least partially transparent layers, said method comprising the steps of:

- separating the plurality of layers of a layer tree of the image into a first list of opaque layers and a second list of at least partially transparent layers;

- assigning each layer an index number;

- sorting the first list in ascending order of the index numbers;

- determining whether or not each of the layers requires rendering;

- if the answer is affirmative, masking each layer to be rendered which is overlapped by an opaque layer; and

- rendering each masked layer and each additional layer to be rendered in order based on their position in their respective sorted list.

The index numbers may be assigned to layers based on their position in the layer tree of the image.
In a preferred embodiment, the index numbers are assigned in ascending order starting from the top of the layer tree of the image.
In an embodiment, the method may include generating a list of intersecting opaque foreground layers from the list of opaque layers and transparent layers.
Furthermore, in the embodiment, the method may include generating a list of intersecting opaque background layers from the list of opaque layers and transparent layers.
The step of masking each layer may include clearing a stencil buffer to integer value 0 from a rectangular area of an axis-aligned bounding rectangle. In other embodiments, the step of masking each layer may be performed through various other masking techniques such as a depth test masking technique.
The step of sorting the first list may include sorting the first list using a stable sorting method. Preferably, the stable sorting method may include an insertion sorting method such that a higher index number is associated with an earlier layer in the list.
The first list may be sorted in reverse numerical order from the second list.
In an embodiment, the step of determining whether or not each of the layers requires rendering may include determining whether or not the image has changed.
In an embodiment, the step of determining whether or not each of the layers requires rendering may include determining whether or not layer content has changed.
In an embodiment, the step of determining whether or not each of the layers requires rendering may include determining whether or not any of the layers have changed, for example, whether or not an additional layer has been included in the layers.

In this embodiment, the method may include determining whether or not the additional layer is a transparent layer. If the answer is affirmative, the method may include notifying all intersecting underneath layers that rendering is required. In addition the method may include notifying all foreground layers that are transparent that the additional layer intersects.

In an example embodiment, the method may include determining whether or not the additional layer is opaque. If the answer is affirmative, the method may include notifying all foreground layers that are transparent with which the additional layer intersects.

In an embodiment, the step of determining whether or not each of the layers requires rendering may include determining whether or not any transparent layer positioned in front of an opaque layer has changed.

In an embodiment, the step of determining whether or not each of the layers requires rendering may include determining whether or not a layer has been removed from the image. If the answer is affirmative, the method may include the step of notifying all underneath layers that the removed layer intersected, and in addition, notifying all foreground layers that are transparent that the removed layer intersected. The method may further include notifying transparent foreground layers that intersected with the removed layer that rendering is required.

In an embodiment, the step of determining whether or not each of the layers requires rendering includes determining whether or not a layer has been removed from the image. If the answer is affirmative, the method may further include the step of notifying all underneath layers that the removed layer intersected.

The method may include generating a mask from all intersecting foreground layers that are opaque.

The step of generating the mask includes clearing a stencil buffer to integer value 0 from a rectangular area of an axis-aligned bounding rectangle.

The method may further include rendering all intersecting foreground opaque layers to stencil buffer with value of 1.

The invention extends to a system for rendering an image with a plurality of opaque and at least partially transparent layers, the system comprising;

- an indexing module which may be operable to assign each layer an index number;

- a separation module which may be operable to separate the plurality of layers of a layer tree of the image into a first list of opaque layers and a second list of at least partially transparent layers;

- a sorting module which may be operable to sort the first list in ascending order of the index numbers;

- an interrogation module which may be operable to determine whether or not each of the layers requires rendering;

- a masking module which may be operable to mask each layer to be rendered which is overlapped by an opaque layer, in response to a determination that the layer requires rendering; and

- a rendering module which may be operable to render each masked layer and each additional layer to be rendered in order based on their position in their respective sorted list.

The invention further extends to a non-transitory computer readable medium having stored thereon a set of computer readable instructions for a causing a processor to render an image with a plurality of opaque and at least partially transparent layers comprising the computer implemented steps of;

- assigning each layer an index number;

- separating the plurality of layers of a layer tree of the image into a first list of opaque layers and a second list of at least partially transparent layers;

- sorting the first list in ascending order of the index numbers;

- determining whether or not each of the layers requires rendering;

- if the answer is affirmative, masking each layer to be rendered which is overlapped by an opaque layer; and

- rendering each masked layer and each additional layer to be rendered in order based on their position in their respective sorted list.

BRIEF DESCRIPTION OF THE DRAWINGS

The invention will be described, by way of example only, with reference to the accompanying drawings in which:

Figure 1 shows a representation of content displayed on a display screen, in use;

Figure 2 shows modules illustrating a system for rendering an image, according to an aspect of the invention;

Figure 3 shows a flowchart representing a method of rendering an image, according to another aspect of the present invention;

Figure 4 shows a schematic view of layers sorted into two lists, in accordance with Figures 2 and 3; and

Figures 5a and 5b show example embodiments of the method of Figure 3.

DETAILED DESCRIPTION OF PREFERRED EMBODIMENTS

In the following description, for purposes of explanation, numerous specific details are set forth in order to provide a thorough understanding of an embodiment of the invention. It will, however, be evident to a person skilled in the art that the invention may be implemented without these specific details, or in the specific manner described.

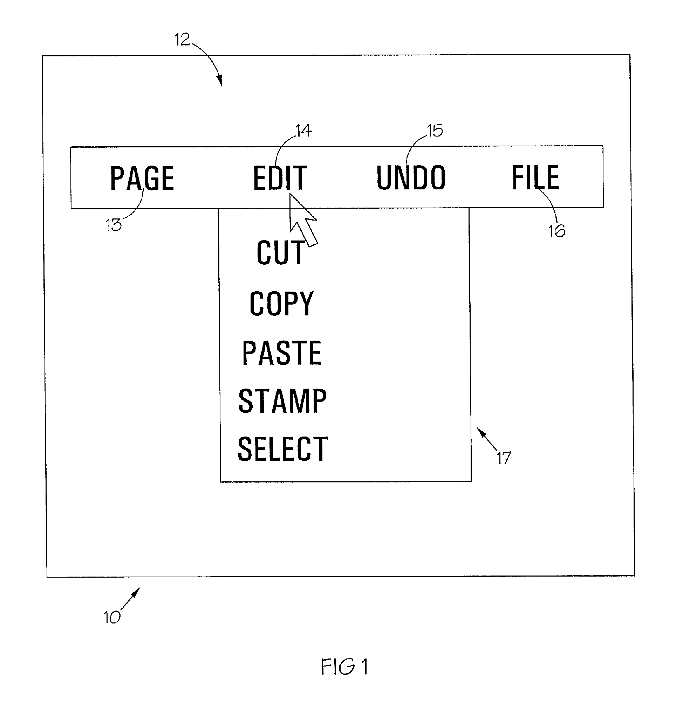

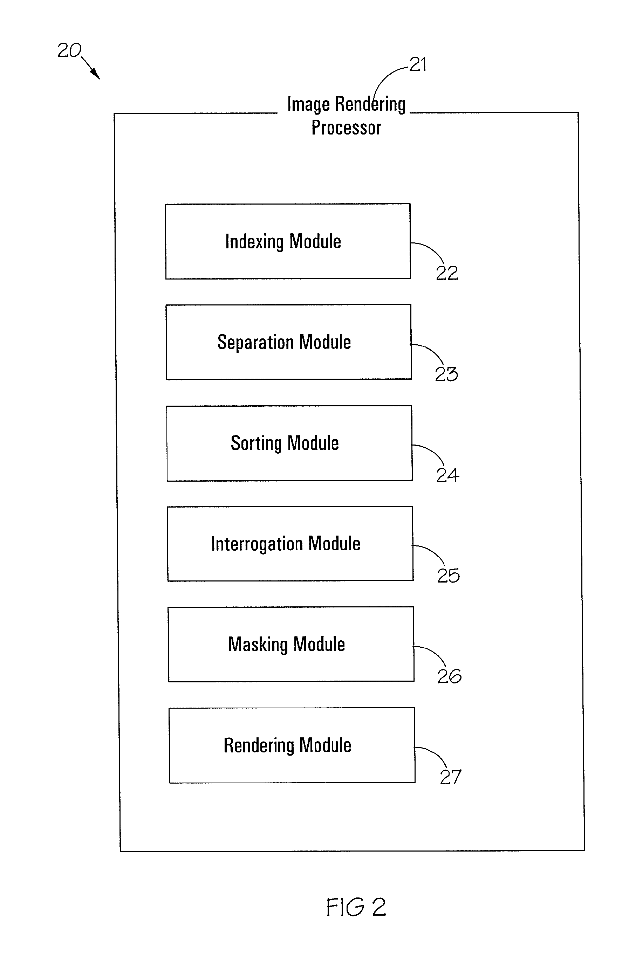

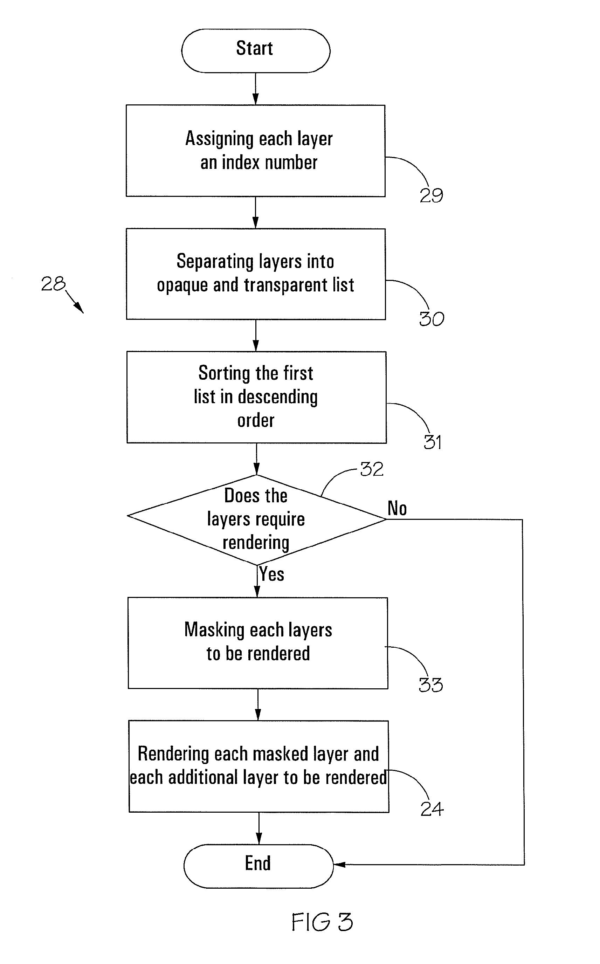

In Figure 1 of the drawings, reference numeral 10 refers generally to a display screen for a display device (not shown). Referring also to Figure 2, a system for rendering an image is indicated by reference numeral 20. The display device can be a mobile device or a personal computer. The display screen 10 includes icons 12 which are illustrated as a PAGE icon 13, an EDIT icon 14, an UNDO icon 15 and a FILE icon 16. By clicking on one of the icons 12, a user is provided with a visual display which is displayed on the display screen as a confirmation of input action provided by the user. Therefore, whenever the user clicks one of the icons 12, the particular display screen 10 has to be updated, accordingly. For example, in Figure 1, when the user clicks on the EDIT icon 14, the display screen is regarded as being damaged and thus should be redrawn. In this example, when the EDIT icon 14 is clicked, a drop down menu is illustrated as indicated by reference numeral 17. When the drop down menu 17 is closed, the region where the menu had been must be redrawn so as to produce a display screen as covered with the menu. In use, a system 20 (see Figure 2) and a method of 28 (see Figure 3) renders images depicted by the drop down menu 17 and an image represented by the closure of the drop down menu 17 by minimizing overdraw. In particular, the system 20 and the method 28 renders the image in an optimal manner by ensuring that layers of the images are divided into opaque layers and transparent layers, prior to rendering the particular layers.

Referring to Figure 2 of the drawings, reference numeral 20 generally indicates a system for rendering an image containing a plurality of opaque and at least partially transparent layers. The system is hereafter referred to as a image rendering system 20, and includes a image rendering processor 21 defining a plurality of conceptual modules 22, 23, 24, 25, 26 and 27 which correspond to functional tasks performed by the processor 21. The modules include an indexing module 22, a separation module 23, a sorting module 24, an interrogation module 25, a masking module 26 and a rendering module 27.

In most graphical applications the display screen has to be redrawn or updated accordingly whenever there is any change to the content of the display screen. Therefore, the content represented by an image requires undergoing a redrawing exercise. The image is first converted into a graph which is in turn represented by a plurality of layers. The layers include opaque and transparent layers. The system 20, through its indexing module 22, assigns an index number to all opaque and transparent layers. The separation module 23 is configured to separate the plurality of layers of a layer tree of the image into a first list of opaque layers and a second list of transparent layers. The sorting module 24 then sorts the opaque list of layers in an ascending order of the index numbers. It will be appreciated that the list can be sorted using various sorting methods. Once the list is sorted, the interrogation module 25 interrogates the plurality of layers in order to determine whether or not the plurality of layers requires rendering. In the event that the layers require rendering, the masking module 26 masks each layer to be rendered which is overlapped by an opaque layer. In turn, the rendering module 27 renders each masked layer and each additional layer to be rendered in order, based on their position in their respective sorted list.

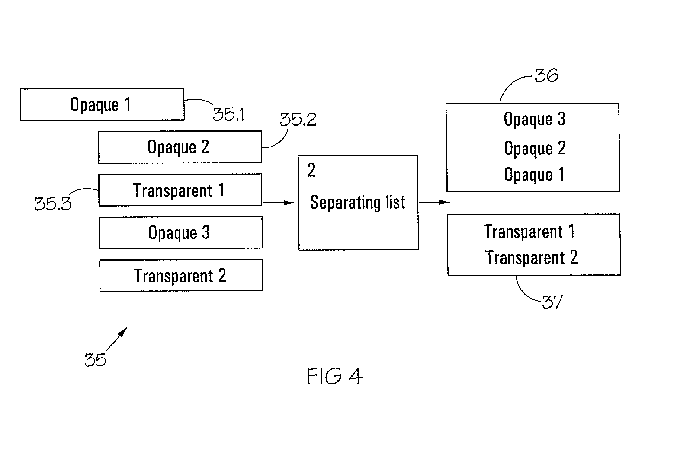

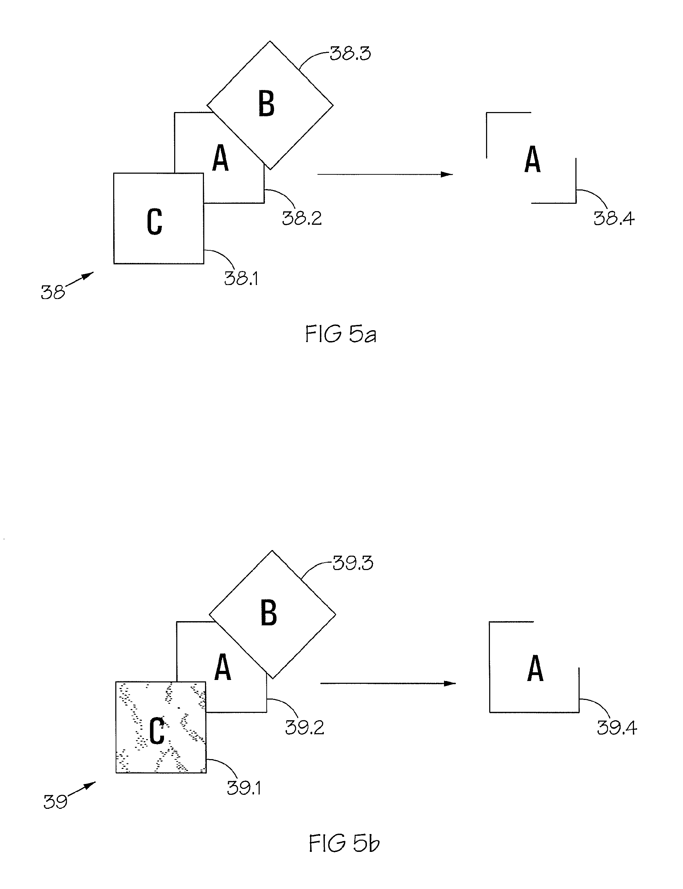

The modules 22, 23, 24, 25, 26 and 27 will be further described with reference to Figure 3 which illustrates a method 28 of rendering an image and Figures 4, 5a and 5b. Figure 4 illustrates a schematic view of layers sorted into two lists, while Figures 5a and 5b illustrate example embodiments of an image being rendered.

Turning specifically to Figures 2, 3, 4, 5a and 5b, the method 28 includes the step of assigning (at block 29), an index number to each layer on a layer tree 35 (see Figure 4). The assignment of the index number is done by the indexing module 22. In particular, each layer on the layer tree is assigned an ascending index number depending on the layer's appearance on the layer tree 35. The index numbers are assigned in ascending order starting from the top of the layer tree of the image to the bottom of the layer tree. For example, and as illustrated in Figure 4, a first opaque layer 35.1 (on a top row) is assigned with index number 1 and a subsequent opaque layer 35.2 is assigned with index number 2. A higher node in the tree 35 which is represented by opaque layer 35.1 is assigned with a lower index number, that is, index number 1. Behind the subsequent opaque layer 35.2 there is a first transparent layer 35.3, and it is assigned with index number 1 and not number 3 because it is a new type of layer.

Once the layers have been assigned with index numbers, the method 28 separates (at block 30) the layers into first and second lists. The separation is done by the separation module 23. The first and second lists represent an opaque list and a transparent list, respectively. Figure 4 illustrates that the opaque list is represented by reference numeral 36 and the transparent list is represented by reference numeral 37.

In the context of this specification, transparent layers may mean that an area that a particular transparent layer covers is dependent on underneath pixel value (s) of the layer. The transparent layers may be defined using the following formulation:

$$C_o = \alpha_a C_A + (1 - \alpha_a) C_b$$

where

C$_o$ is an output color value at a specific pixel coordinate;
C$_A$ is a transparent layer color to be rendered at a specific pixel coordinate;
C$_b$ is an existing color at a specific pixel coordinate;
$\alpha_a$ is a transparency value of C$_A$ at a specific pixel coordinate, effectively blending between existing color value and transparent layer color value. For example, $\alpha_a$ = 1.0 may indicate a fully opaque pixel value and $\alpha_a$ = 0.0 may indicate a fully transparent pixel value. Therefore, the transparent layer is specified as a composition result of multiple layers, blending between A and B according to alpha channel of A. It will be appreciated by a person skilled in the art that opaque layers are not dependent on the underneath pixel values.

From the transparent and opaque layers, the system can generate (not shown) a list of intersecting opaque foreground layers and a list of intersecting opaque background layers. Therefore, each layer contains two lists: one for intersecting background layers and one for intersecting foreground layers. These intersection lists can be generated during the conversion of the graph to the layers, so that an axis aligned bounding rectangle test is performed against all underneath and foreground layers.

The method 28 sorts (at block 31), via a sorting module 24, the opaque list in a descending order. That is, the opaque list is sorted in reverse numerical order from the transparent list. In a preferred embodiment, the opaque list 36 is sorted using a conventional method known as stable sorting. In particular, the opaque list 36 is sorted using an insertion sort method such that a layer which has been assigned a higher index number is positioned as an earlier layer in the opaque list 36. As shown in Figure 4, the first opaque layer illustrated on the opaque list 36 is illustrated as opaque number 3.

At block 32, the method includes the step of determining whether or not each of the layers requires rendering. In particular, the interrogation module 25 interrogates the layers in order to determine whether or not the layers require rendering. There are various reasons that a particular layer can require rendering. In an example embodiment, rendering may be required where the image has changed. For example, where the image is in a form of a drop down menu displayed on the screen, the image can be changed by closing down the drop down menu. In other cases, where the image is in a form of a box which can be ticked, the image can be changed when the box is ticked. Therefore, any change to the image will result in the layers of the image requiring rendering.

In other cases where the layers have changed, such change of the layers will result in the layers requiring rendering in order to update such change. The layers can change, for example, when an additional layer is included in the layers. The additional layer can be checked as to whether or not it is transparent or opaque. If the additional layer is transparent, all intersecting underneath layers will be notified that rendering is required. In addition, all foreground layers can be notified that are transparent that the additional layer intersects. If the additional layer is opaque, all foreground layers can be notified that there is a transparent layer with which the additional layer intersects.

In other example embodiments, to determine whether or not a layer requires rendering can include determining whether or not any transparent layer positioned in front of an opaque layer has changed. In other alternative embodiments,

EP 2 801 971 A1

to determine whether or not a layer requires rendering can include determining whether or not a layer has been removed from the image. If it is found that a layer has been removed from the image, then all underneath layers that intersected with the removed layer shall be notified that rendering is required. In addition, the transparent foreground layers that intersected with removed layer shall also be notified that rendering is required.

Data in the color buffer (video/screen memory) is preserved from previous render results. On hardware that uses double buffering (or triple buffering) for displaying pixels from memory (buffer A) to screen (buffer B), content of the buffer is required to be copied from buffer A to buffer B, instead of flipping the buffers. This is a commonly supported swap mechanism on GPUs, in that buffer data can be copied instead of flipping the buffers.

The following algorithm describes how the render flag is triggered for each layer in the layer list, assuming the information about intersecting layers is already known:

```
foreach Layer in LayerList

        LayerObserveRender(layer)

LayerObserveRender(Layer layer)

        TriggerIntersectingBackgroundLayers = Flase

        TriggerIntersectingForegroundTransparentLayers = Flase

If layer.contentChanged()

        layer.RenderRequired = True

If layer.transformationChanged()

        layer.RenderRequired = True

        TriggerIntersectingForegroundTransparentLayers = True

         TriggerIntersectingBackgroundlayers = True

If layer.RenderRequired == True AND layer.isTransparent()

        TriggerIntersectingForegroundTransparentLayers = True

If layer.RenderRequired

        foreach Layer foregroundLayer in layer.intersectingForegroundLayers()//Intersecting transparent
layers in current and previous frame

            if foregroundLayer.isTransparent() AND foregroundLayer.RenderRequired == False

                foregroundLayer.RenderRequired = True

                 LayerObserveRender(foregroundLayer)

If TriggerIntersectingBackgroundLayers

        foreach Layer backgroundLayer in Layer. IntersectingBackgroundLayers()//intersecting layers in
current and previous frame

        if backgroundLayer.RenderRequired == False

            backgroundLayer.RenderRequired = True

        LayerObserveRender(backgroundLayer)
```

Referring to the above algorithm, the interrogation module 25 will determine whether each layer requires rendering. In cases where a particular layer requires rendering, a flag will be set against the particular layer. The setting of the flag against layers is an indication of the layers which require rendering. Status of the flag may for example be "False" or "True", where "False" is an indication that a particular layer does not require rendering and "True" is an indication that a particular layer does require rendering.

If a flag of a background layer is "False", then that layer intersects with an independent opaque layer and an intersecting transparent layer. If a flag of an independent opaque layer is "False", then that independent opaque layer intersects with the background layer. If a flag of an intersecting transparent layer is indicated as "True", then the intersecting transparent layer intersects with the background layer. According to the algorithm, an intersecting transparent layer will trigger intersecting opaque layers to be rendered, too, resulting in change in a status of the flags. The change is illustrated below.

The flag of the background layer is changed to "True". The flag of the independent opaque layer indicates a status of "False" because the independent opaque layer did not intersect with a transparent layer. In this instance, the flag of the intersecting transparent layer is indicated as "True". This means that the background layer shall be rendered, accordingly. Basically, all underneath layers that intersected with a removed layer shall be notified that rendering is required.

Referring to Figure 5a, once it has been identified that the layers require rendering, the masking module 26, at block 33, generates an intersection mask 38.4 from all intersecting foreground layers 38.1 and 38.3 that are opaque. In the example embodiment, layer 38.1 and 38.3 are both opaque, therefore, layer 38.2 is subsequently masked by both layers 38.1 and 38.3. The intersection mask is generated by clearing a stencil buffer to integer value 0 from the rectangular area of the axis-aligned bounding rectangle. Thereafter all intersecting foreground opaque layers are rendered to stencil buffer with value of 1. Finally when rendering an individual layer on screen, a stencil test function that accepts all fragments with stencil value 0 is performed. It will be appreciated to those skilled in the art that the masking module 26 can use various other masking techniques in order to mask the layers which requires rendering. In an example embodiment, the masking technique can be a technique named a depth test masking technique.

In Figure 5b an opaque and transparent mask is illustrated as reference numeral 39. In particular, layer 39.2 is masked with layer 39.3 but not with layer 39.1, because pixels in 39.2 are required to be rendered in order to ensure that 39.1 renders correctly. This is because layer 39.1 has dependency from layer 39.2. This ensures that an update is only performed to a sub-region of frame, by calculating layer dependencies and based on them, only rendering the layers that are necessary.

The invention as exemplified is advantageous in that renders images while increasing performance and reducing power.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

**Claims**

1.  A method of rendering an image containing a plurality of opaque and at least partially transparent layers, said method comprising the steps of:

    - separating the plurality of layers of a layer tree of the image into a first list of opaque layers and a second list of at least partially transparent layers;
    - assigning each layer an index number;
    - sorting the first list in ascending order of the index numbers;
    - determining whether or not each of the layers requires rendering;
    - if the answer is affirmative, masking each layer to be rendered which is overlapped by an opaque layer; and
    - rendering each masked layer and each additional layer to be rendered in order based on their position in their respective sorted list.

2.  The method as claimed in claim 1, wherein the index numbers are assigned to layers based on their position in the layer tree of the image.

3.  The method as claimed in claim 1 or 2, wherein the index numbers are assigned in ascending order starting from the top of the layer tree of the image.

4.  The method as claimed in any of the preceding claims, which further comprises the step of generating a list of intersecting opaque foreground layers from the list of opaque layers and transparent layers.

5.  The method as claimed in any of the preceding claims, wherein the step of masking each layer includes clearing a stencil buffer to integer value 0 from a rectangular area of an axis-aligned bounding rectangle.

6.  The method as claimed in any of claims 1 to 4, where the step of masking each layer includes the use of a depth test masking technique.

7.  The method as claimed in any of the preceding claims, which further comprises the step of generating a list of intersecting opaque background layers from the list of opaque layers and transparent layers.

8.  The method as claimed in any of the preceding claims, wherein the step of sorting the opaque first list includes sorting the opaque first list using a stable sorting algorithm, wherein the stable sorting includes an insertion sorting method such that a higher index number is associated with an earlier layer in the list and wherein the opaque first list is sorted in reverse numerical order from the transparent second list.

9.  The method as claimed in any of the preceding claims, wherein the step of determining whether or not each of the layers requires rendering include determining whether or not the image has changed.

10. The method as claimed in any of the preceding claims, wherein the step of determining whether or not each of the layers requires rendering include determining whether or not layer content has changed.

11. The method as claimed in any of the preceding claims, wherein the step of determining whether or not each of the layers requires rendering may include determining whether or not any of the layers have changed, and wherein the layers changes when additional layer has been included in the layers.

12. The method as claimed in claim 11, which includes the step of determining whether or not the additional layer is transparent and wherein, in response to a determination that the additional layer is transparent, the method further includes notifying all intersecting underneath layers that rendering is required and notifying all foreground layers that are transparent that the additional layer intersects.

13. The method as claimed in claim 11 or 12, which further comprises determining whether or not the additional layer is opaque, and wherein, in response to a determination that the additional layer is opaque, notifying all underneath layer that the additional layer intersects and notifying all foreground layers that are transparent with which the additional layer intersects.

**14.** A system for rendering an image with a plurality of opaque and at least partially transparent layers, the system comprising;

- an indexing module being operable to assign each layer an index number;
- a separation module being operable to separate the plurality of layers of a layer tree of the image into a first list of opaque layers and a second list of at least partially transparent layers;
- a sorting module being operable to sort the first list in ascending order of the index numbers;
- an interrogation module being operable to determine whether or not each of the layers requires rendering;
- a masking module being operable to mask each layer to be rendered which is overlapped by an opaque layer, in response to a determination that the layer requires rendering; and
- a rendering module being operable to render each masked layer and each additional layer to be rendered in order based on their position in their respective sorted list.

**15.** A non-transitory computer readable medium having stored thereon a set of computer readable instructions for a causing a processor to rendering an image with a plurality of opaque and at least partially transparent layers comprising the computer implemented steps of;

- assigning each layer an index number;
- separating the plurality of layers of a layer tree of the image into a first list of opaque layers and a second list of at least partially transparent layers;
- sorting the first list in ascending order of the index numbers;
- determining whether or not each of the layers requires rendering;
- if the answer is affirmative, masking each layer to be rendered which is overlapped by an opaque layer; and
- rendering each masked layer and each additional layer to be rendered in order based on their position in their respective sorted list.

FIG 1

20

21

Image Rendering
Processor

Indexing Module

22

Separation Module

23

Sorting Module

24

Interrogation Module

25

Masking Module

26

Rendering Module

27

FIG 2

Start

Assigning each layer
an index number

29

28

Separating layers into
opaque and transparent list

30

Sorting the first
list in descending
order

31

32

Does the
layers require
rendering

No

Yes

Masking each layers
to be rendered

33

Rendering each masked layer and
each additional layer to be rendered

24

End

FIG 3

Opaque 1   35.1   35.2

Opaque 2

Transparent 1

35.3

Opaque 3

Transparent 2

2

Separating list

36

Opaque 3

Opaque 2

Opaque 1

Transparent 1

Transparent 2

37

35

FIG 4

FIG 5a

FIG 5b

Europäisches
Patentamt

European
Patent Office

Office européen
des brevets

## EUROPEAN SEARCH REPORT

Application Number

EP 13 16 7271

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/122036 A1 (SASAKI NOBUO [JP]) 5 September 2002 (2002-09-05) * figures 1-7 * * paragraphs [0007], [0021], [0031], [0037], [0039] - [0041] * ----- | 1-15 | INV. G09G5/14 G09G5/395 G06T15/40 |
| X | US 2008/211811 A1 (KOMOOKA HARUO [JP] ET AL) 4 September 2008 (2008-09-04) * figures 1-7 * * paragraphs [0007], [0010] - [0012], [0018], [0033], [0034], [0039] - [0042], [0048] - [0053] * ----- | 1-15 | |
| X | US 2005/057574 A1 (ANDREWS JEFFREY A [US]) 17 March 2005 (2005-03-17) * figures 1-6 * * paragraphs [0016] - [0018], [0022] - [0028], [0032] * ----- | 1-15 | |

|  |
|---|
| TECHNICAL FIELDS SEARCHED (IPC) |
| G09G G06T |

The present search report has been drawn up for all claims

| Place of search | Date of completion of the search | Examiner |
|---|---|---|
| The Hague | 16 September 2013 | Maciu, Emanoil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 13 16 7271

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2013

| Patent document cited in search report | | Publication date | Patent family member(s) | | Publication date |
|---|---|---|---|---|---|
| US 2002122036 | A1 | 05-09-2002 | EP | 1357518 A1 | 29-10-2003 |
| | | | JP | 3635051 B2 | 30-03-2005 |
| | | | JP | 2002304636 A | 18-10-2002 |
| | | | US | 2002122036 A1 | 05-09-2002 |
| | | | WO | 02061687 A1 | 08-08-2002 |
| US 2008211811 | A1 | 04-09-2008 | GB | 2350993 A | 13-12-2000 |
| | | | JP | 3258286 B2 | 18-02-2002 |
| | | | JP | 2000182073 A | 30-06-2000 |
| | | | US | 7453458 B1 | 18-11-2008 |
| | | | US | 2008211811 A1 | 04-09-2008 |
| US 2005057574 | A1 | 17-03-2005 | US | 2005057574 A1 | 17-03-2005 |
| | | | US | 2006103647 A1 | 18-05-2006 |

EPO FORM P0459

For more details about this annex : see Official Journal of the European Patent Office, No. 12/82